# EUROPÄISCHE PATENTSCHRIFT

(11) **EP 2 539 597 B1**
(45) Veröffentlichungstag und Bekanntmachung des Hinweises auf die Patenterteilung: **29.06.2016**
(21) Anmeldenummer: 10787295.4
(22) Anmeldetag: 26.11.2010
(51) Int. Cl.: F16D 25/08, F16D 25/12

(54) **EINRICHTUNG MIT EINEM RINGZYLINDER UND EINEM RINGKOLBEN**
DEVICE COMPRISING A RING CYLINDER AND A RING PISTON
DISPOSITIF COMPRENANT UN CYLINDRE ANNULAIRE ET UN PISTON ANNULAIRE

(30) Priorität: 24.02.2010 DE 102010009036
(43) Veröffentlichungstag der Anmeldung: 02.01.2013
(73) Patentinhaber: WABCO GmbH, 30453 Hannover (DE)
(72) Erfinder: BORCHERS, Harald, 31542 Bad Nenndorf (DE); KLIK, Stefan, 30459 Hannover (DE); KLÜCK, Frank-Peter, 31832 Springe (DE)
(74) Vertreter: Lauerwald, Jörg
(86) Internationale Anmeldenummer: PCT/EP2010/007180
(87) Internationale Veröffentlichungsnummer: WO 2011/103894

(56) Entgegenhaltungen:
- EP-A2- 1 887 242
- WO-A1-97/44594
- WO-A2-03/100260
- DE-A1- 10 011 426
- DE-A1- 10 138 722
- DE-A1- 10 314 962
- DE-A1-102009 019 999
- DE-A1-102009 021 902
- FR-A1- 2 757 590

## Beschreibung

Die Erfindung betrifft eine Einrichtung mit einem Ringzylinder und einem konzentrisch auf dem Ringzylinder angeordneten Ringkolben gemäß dem Oberbegriff des Patentanspruchs 1.

Eine gattungsgemäße Einrichtung mit einem Ringzylinder und einem Ringkolben ist aus der DE 103 23 953 A1 bekannt. Einrichtungen dieser Art werden beispielsweise als Betätigungseinrichtung für eine Fahrzeugkupplung verwendet. Der Aufbau einer solchen Kolben-/Zylindereinrichtung mit ringförmigen Kolben- und Zylinderbauteilen erlaubt eine vorteilhafte Platz sparende Unterbringung eines derart aufgebauten Kupplungsbetätigungszylinders im Antriebsstrang eines Fahrzeuges. Der ringförmige Aufbau erlaubt es, dass die Getriebewelle durch den Ringzylinder hindurchgeführt wird, so dass der Ringzylinder Platz sparend untergebracht werden kann.

Dort wird vorgeschlagen, sowohl den Kolben als auch den Zylinder aus Blech zu formen. Hierbei stellt sich aber das Problem, eine ausreichende Oberflächengüte der Dicht- und/oder Führungsflächen, die zwischen Kolben und Zylinder gebildet sind, zu gewährleisten. Eine spanende Nachbearbeitung ist bei Blechteilen nicht ratsam. Daher wird dort vorgeschlagen, die Dicht- und/oder Führungsfläche mit einer Lackschicht mit einer funktionsgerechten Oberflächenrauhigkeit zu versehen.

Die genannte Lackschicht hat aber den Nachteil, dass sie relativ teuer in der Herstellung ist und der Herstellungsprozess aufwendig ist. Die Lackschicht ist auch nach dem Trocknen beschädigungsempfindlich, insbesondere gegen Kratzer. Der Aufbau der Betätigungseinrichtung aus Blechteilen für Kolben und Zylinder ist zudem mit relativ hohen Fertigungsungenauigkeiten verbunden, da dünnwandige Blechteile leicht einem Verzug unterliegen. Zudem kann ein solcher Verzug an den Blechteilen auch im späteren Betrieb der Betätigungseinrichtung aufgrund von Temperatureinflüssen auftreten.

Eine weitere gattungsgemäbe Einrichtung ist z.B. aus EP 1887242 bekannt. Dieses Dokument zeigt einen Ringzylinder, wobei am Außenumfang im Abstand zu einander umlaufende Versteifungsrippen angeordnet sind.

Der vorliegenden Erfindung liegt daher die Aufgabe zugrunde, eine verbesserte Ausführung einer Einrichtung mit einem Ringzylinder und einem Ringkolben anzugeben, die bei kostengünstiger Fertigung eine hohe Dauerfestigkeit und Langlebigkeit aufweist.

Diese Aufgabe wird durch die in dem Patentanspruch 1 angegebene Erfindung gelöst. Die Unteransprüche gegen vorteilhafte Ausgestaltungen der Erfindung an.

Gemäß der Erfindung ist der Ringzylinder aus Aluminiumguss herzustellen und mit geeigneten Vorrichtungen entsprechend spanend zu bearbeiten. Hierdurch kann relativ kostengünstig eine vergleichsweise hochwertige, glatte Lauffläche für den Kolben auf dem Zylinder hergestellt werden. Durch die Verwendung von Aluminium ist eine erfindungsgemäße Eloxierung der Oberfläche möglich, so dass beispielsweise keine Lackschicht aufgebracht werden muss. Durch die Eloxierung wird die Oberfläche gehärtet und zusätzlich geglättet. Gegenüber dem Lackieren hat das Eloxieren den weiteren Vorteil, dass der Prozess in der Fertigung schneller durchgeführt werden kann, z. B. durch ein Elektrolyseverfahren. Es muss insbesondere keine Trockenphase für eine Lackbeschichtung abgewartet werden. Die Oberfläche wird härter und verschleißfester. Ein Vorteil der Verwendung von Aluminiumguss statt Blechteilen ist, dass Gewicht eingespart werden kann.

Gemäß der Erfindung ist auch der Ringkolben aus Aluminiumguss hergestellt. In Verbindung mit dem aus dem gleichen Material, nämlich Aluminiumguss, hergestellten Ringzylinder bietet die erfindungsgemäße Einrichtung eine erhöhte Funktionssicherheit im gesamten Temperaturbereich, da durch Verwendung eines einheitlichen Materials der Ringzylinder und der Ringkolben den gleichen Temperaturausdehnungskoeffizienten aufweisen. Hierdurch kann eine temperaturbedingte Änderung von Toleranzen minimiert werden und einem möglichen Verzug der Bauteile vorgebeugt werden.

Die erfindungsgemäße Einrichtung ist für eine pneumatische Betätigung eingerichtet. Entsprechend kann die Druckmittelkammer mit Druckluft befüllt werden.

Die erfindungsgemäße Einrichtung eignet sich besonders als Betätigungseinrichtung für eine Fahrzeugkupplung in einem Nutzfahrzeug, d.h. einem Lastkraftwagen oder einem Bus.

Gemäß der Erfindung sind sämtliche zwischen dem Ringkolben und dem Ringzylinder wirksamen Dicht- und Abstreifelemente direkt an dem Ringkolben befestigt. Dies hat den Vorteil, dass nur Laufflächen an dem Ringzylinder hinsichtlich ihrer Oberfläche durch die Eloxierung vergütet werden müssen. Ein weiterer Vorteil ist, dass die Montage der Dicht- und Abstreifelemente vereinfacht ist, da die Montage nur auf einem Bauteil, nämlich dem Ringkolben vorgenommen werden muss. Hierdurch wird die Herstellung der erfindungsgemäßen Einrichtung weiter vereinfacht und kostengünstiger gestaltet. Die direkt Befestigung auf dem Ringkolben hat den weiteren Vorteil, dass keine zusätzlichen, wie etwa ein Zwischenstück oder ein zusätzliches Halteelement, erforderlich sind. Hierdurch kann die erfindungsgemäße Einrichtung kostengünstiger hergestellt und montiert werden.

Gemäß einer vorteilhaften Weiterbildung der Erfindung weist der Ringkolben als Abstreifelement einen umlaufenden, in beiden Zylinder-Laufrichtungen wirksamen Abstreifring auf. Durch den Abstreifring wird ein Eindringen von Partikeln aus der Umgebung in die Druckmittelkammer und zugleich ein Austreten von Schmiermitteln aus der Druckmittelkammer verhindert. Der Abstreifring weist damit eine vorteilhafte Doppelfunktion auf. Einerseits schützt der Abstreifring die Zylinderlauffläche vor Staub, der z. B. im Bereich einer Fahrzeug-Kupplung verstärkt durch den Kupplungsabrieb anfällt. Damit wird wirksam ein unerwünschter Abrieb auf der Zylinderlauffläche vermieden. Zusätzlich bewirkt der Abstreifring, dass innerhalb der Druckmittelkammer vorgesehenes Schmiermittel, z. B. Fett, nicht austritt und in der Druckmittelkammer gehalten wird. Vorteilhaft wird zudem ein Luftaustausch zwischen dem Ringkolben und dem Ringzylinder vermieden, d. h. es tritt keine unerwünschte Pumpwirkung beim Hin- und Herfahren des Ringkolbens auf dem Ringzylinder auf.

Gemäß einer vorteilhaften Weiterbildung weist der Abstreifring wenigstens eine doppeltwirkende Abstreiflippe oder eine Anordnung von zwei Abstreiflippen auf. Der Abstreifring kann beispielsweise in Form eines Bauteils ähnlich wie bekannte Lippendichtringe ausgeführt sein, jedoch mit in zwei Richtungen weisenden Lippen. Vorteilhaft ist auch eine Ausführung des Abstreifrings in Form zweier Lippendichtringe, die in entgegengesetzter Orientierung zueinander angeordnet sind, so dass die Lippen jeweils zur Außenseite der Anordnung weisen. Es kann sozusagen eine "Rücken-an-Rücken" Anordnung zweier Lippendichtringe verwendet werden.

Gemäß einer vorteilhaften Weiterbildung der Erfindung weist der Abstreifring im nicht in der Einrichtung montierten Zustand einen größeren Innendurchmesser auf als der Außendurchmesser des Ringkolbens im für die Anordnung des Abstreifrings vorgesehenen Bereich. Dies hat den Vorteil, dass der Abstreifring nicht eng an einer Montagenut im Ringkolben anliegt, sondern lose gegenüber dem Ringkolben ist. Hierdurch werden Reibkräfte zwischen dem Abstreifring und dem Ringkolben minimiert. Vorteilhaft kann auch der Außendurchmesser des Abstreifrings größer als der Innendurchmesser des Ringzylinders im Bereich der Lauffläche für den Abstreifring sein. Hierdurch steht der Abstreifring im montierten Zustand in der erfindungsgemäßen Einrichtung unter einer gewissen radial nach außen wirkenden Vorspannung, durch die die Abstreiflippen gegen die Lauffläche des Ringzylinders gedrückt werden.

Gemäß einer vorteilhaften Weiterbildung der Erfindung weist der Abstreifring in Umfangsrichtung eine Unterbrechung auf. In der Unterbrechung ist ein elastisches Einsatzstück angeordnet. In einer vorteilhaften Ausführung weist das Einsatzstück das gleiche Dichtprofil auf wie der Abstreifring, z.B. die doppeltwirkende Abstreiflippe oder die Anordnung von zwei Abstreiflippen. Hierdurch kann der Abstreifring einfacher montiert werden, indem zunächst nur der Abstreifring auf dem Ringzylinder angeordnet wird und sodann der Abstreifring an der Unterbrechung aufgeweitet wird und das Einsatzstück in die Unterbrechung eingesetzt wird. Das Einsatzstück kann vorteilhaft aus einem Elastomermaterial gefertigt sein.

Gemäß einer vorteilhaften Weiterbildung der Erfindung weist der Ringkolben als Dichtelement einen im Abstand vom Abstreifring angeordneten umlaufenden Dichtring auf, durch den die Druckmittelkammer gegen ein Austreten von Druckmittel abgedichtet ist. Der Einsatz solcher separaten Elemente für die Abstreiffunktion und für die Dichtfunktion hat den Vorteil, dass die einzusetzenden Materialien besser auf den jeweiligen Anwendungszweck optimiert werden können als bei einem gemeinsamen Element aus nur einem Material. So kann der Abstreifring materialmäßig auf seine Funktionen Staubabstreifung und Schmiermittelabstreifung hin ausgerichtet werden. Der Dichtring kann materialmäßig zur optimalen Abdichtung der Druckmittelkammer ausgelegt werden, um Leckageverluste zu minimieren. In der Umgebung anfallender Staub wird dabei durch den Abstreifring wirkungsvoll vom Dichtring ferngehalten. Die erfindungsgemäße Einrichtung eignet sich daher besonders für Einsatzorte mit hohem Staubgehalt, z.B. in der Nähe von Reibungskupplungen von Fahrzeugen.

Gemäß einer vorteilhaften Weiterbildung der Erfindung ist der Dichtring zwischen dem Abstreifring und der Druckmittelkammer angeordnet. Der Dichtring ist somit auf der der Druckmittelkammer zugewandten Seite des Abstreifrings angeordnet.

Gemäß einer vorteilhaften Weiterbildung der Erfindung ist zwischen dem Abstreifring und dem Dichtring ein Ringraum gebildet. In dem Ringraum ist ein Schmiermittel, z.B. Fett, vorgesehen. Durch das Schmiermittel wird die Lebensdauer der erfindungsgemäßen Einrichtung erhöht. Vorteilhaft wird der Ringraum für die Unterbringung des Schmiermittels verwendet, was den Vorteil hat, dass das Schmiermittel an der gewünschten Stelle gekapselt untergebracht werden kann, ohne dass hierfür zusätzliche Bauelemente erforderlich sind.

Gemäß einer vorteilhaften Weiterbildung der Erfindung ist die Einrichtung als Kupplungsaktuator für eine Kupplung eines Kraftfahrzeugs ausgebildet. Gemäß der Erfindung ist auf dem Ringkolben eine gegenüber dem Ringkolben um die Längsachse des Ringkolbens drehbar gelagerte Betätigungsplatte für eine Kupplung angeordnet. Die Betätigungsplatte drückt bei Druckbeaufschlagung der Druckmittelkammer gegen die Kupplung, was bei entsprechender Druckbeaufschlagung ein Ausrücken der Kupplung bewirkt. Durch die drehbar gelagerte Betätigungsplatte kann die erfindungsgemäße Einrichtung wirksam von der Drehbewegung, die ein mit der Betätigungsplatte in Eingriff stehendes Bauteil der Kupplung ausführt, entkoppelt werden. Der erfindungsgemäße Ringzylinder kann damit in einfacher Weise fest an einem Bauteil des Kraftfahrzeugs montiert werden.

Gemäß der Erfindung weist der Ringzylinder am Außenumfang radiale, um die Längsachse des Ringzylinders umlaufende Verstärkungsrippen auf. Durch die Verstärkungsrippen kann wirksam eine Aufweitung des Zylinders in Folge der Druckbeaufschlagung über die gesamte axiale Länge des Zylinders minimiert werden. Hierdurch kann die Funktion und Dichtigkeit der Ringkolben-/Ringzylinderanordnung über eine lange Lebensdauer gewährleistet werden.

Gemäß der Erfindung variieren die umlaufenden Verstärkungsrippen entlang der axialen Erstreckung des Ringzylinders. Ausgehend von einer Rückwand des Ringzylinders nehmen die Abstände zwischen den Verstärkungsrippen ab. Alternativ oder zusätzlich kann die Breite der Verstärkungsrippen ausgehend von der Rückwand zunehmen. Dies erlaubt eine angepasste Dimensionierung der Verstärkungsrippen je nach Abstand von der Rückwand und damit eine wirkungsvolle Vermeidung der Aufweitung des Ringzylinders an jeder Position bei zugleich geringem Materialbedarf und Gewicht. So können die Verstärkungsrippen beispielsweise in der Nähe der Rückwand schmaler bzw. mit größerem Abstand zueinander vorgesehen werden, da dort die Aufweitungsgefahr in Folge der Druckbeaufschlagung geringer ist. Mit zunehmendem Abstand von der Rückwand können die Verstärkungsrippen breiter und/oder in geringerem Abstand voneinander vorgesehen sein, da dort der potenzielle Aufweitungseffekt in Folge der Druckbeaufschlagung verstärkt auftritt.

Gemäß einer vorteilhaften Weiterbildung der Erfindung ist der Innendurchmesser des Ringzylinders an einer vorbestimmten Position in Richtung der Längsachse des Ringzylinders von einem ersten auf einen zweiten Durchmesser vergrößert.

Gemäß einer vorteilhaften Weiterbildung der Erfindung sind am Übergang von dem ersten auf den zweiten Durchmesser lamellenartige Verstärkungsrippen mit einer Erstreckung in radialer und entlang der Längsachse verlaufender Richtung angeordnet. Die Verstärkungsrippen bewirken eine Verstärkung der Struktur des Ringzylinders. Durch die lamellenartigen Verstärkungsrippen können lokale Spannungen im Material des Ringzylinders gleichmäßiger verteilt werden, so däss auch bei relativ geringer Materialstärke eine hohe mechanische Belastbarkeit des Ringzylinders realisiert werden kann. Vorteilhaft können die lamellenartigen Verstärkungsrippen über den gesamten Umfang des ersten, kleineren Durchmessers des Ringzylinders vorgesehen sein.

Die Erfindung wird nachfolgend anhand eines Ausführungsbeispiels unter Verwendung von Zeichnungen näher erläutert. Es zeigen
- Figur 1: eine erfindungsgemäße Einrichtung in Schnittdarstellung und
- Figur 2: einen Abstreifring in Schnittdarstellung und
- Figur 3: einen Abstreifring in perspektivischer Darstellung.

In den Figuren werden gleiche Bezugszeichen für einander entsprechende Elemente verwendet.

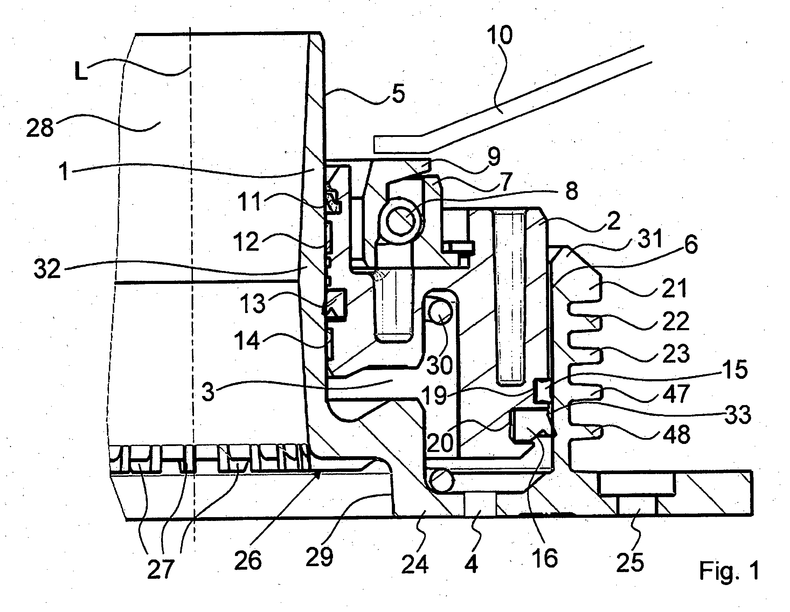

Die Figur 1 zeigt die erfindungsgemäße Einrichtung in Schnittdarstellung, wobei nur eine Hälfte der Einrichtung dargestellt ist, da die Einrichtung symmetrisch ausgeführt ist und die andere, nicht dargestellte Hälfte gleich aufgebaut ist.

Erkennbar ist ein Ringzylinder 1 mit einer im Wesentlichen zylindrischen, in der Mitte in Richtung einer Längsachse L des Ringzylinders 1 durchgehenden Öffnung 28. Durch die Öffnung 28 kann bei Verwendung des Ringzylinders als Betätigungseinrichtung für eine Fahrzeugkupplung die Getriebewelle geführt sein. Der Ringzylinder 1 weist im Bereich der Öffnung 28 einen ersten Durchmesser auf. In einem Übergangsbereich 26 vergrößert sich der Durchmesser des Ringzylinders auf einen zweiten, größeren Durchmesser bis hin zu einer Wand 29. Die ringförmige Wand 29 kann z. B. als Aufnahme für einen Zentrierflansch eines Getriebes dienen. Hierdurch kann die in Figur 1 dargestellte Einrichtung schnell zentriert auf einem Getriebe montiert werden. Der Ringzylinder 1 erstreckt sich weiter über eine Rückwand 24. In einem außen liegenden Flansch-Bereich der Rückwand 24 ist eine Befestigungsöffnung 25 vorgesehen, über die der Ringzylinder an eine Halteplatte eines Getriebes geschraubt werden kann. Der Ringzylinder 1 erstreckt sich zudem in einem als äußere Wand ausgebildeten Bereich 31 wiederum von der Rückwand 24 fort. Hierdurch bildet der Ringzylinder zwischen der die Öffnung 28 begrenzenden Wand 32 und der äußeren Wand 31 einen ringförmigen Hohlraum.

Ferner ist erkennbar, dass in dem Bereich des Übergangs von dem ersten auf den zweiten Innendurchmesser des Ringzylinders 1 lamellenartige Verstärkungsrippen 27 vorgesehen sind, die sich entlang der Längsachse L und zudem in radialer Richtung von der die Öffnung 28 begrenzenden Wand 32 nach außen hin erstrecken. Die Verstärkungsrippen 27 sind relativ schmalbauend ausgeführt, wobei der Abstand zwischen zwei Verstärkungsrippen z. B. etwa drei Mal so groß ausgeführt sein kann wie die Breite einer Verstärkungsrippe. Die Verstärkungsrippen 27 weisen, wie ebenfalls in der Figur 1 erkennbar, eine Form auf, durch die eine Kraftübertragung von dem Ringzylinderbereich mit dem kleineren Durchmesser in den Bereich mit dem größeren Durchmesser gleichmäßig im Material verteilt wird.

Auf dem Ringzylinder 1 ist ein Ringkolben 2 angeordnet. Der Ringkolben 2 bildet mit den seitlichen Wänden 31, 32 des Ringzylinders 1 sowie der Rückwand 24 eine Druckmittelkammer 3, die über eine Druckmittelversorgungsöffnung 4 mit Druckmittel, z. B. Druckluft, beaufschlagt werden kann. Auf dem Ringzylinder 2 ist eine Betätigungsplatte 9 angeordnet, über die bei Druckbeaufschlagung der Druckmittelkammer 3 ein Kupplungsausrückelement 10 mit Kraft beaufschlagt wird. Die Betätigungsplatte 9 ist über ein Kugellager 8 und einen Kugelaufnahmering 7 mit dem Ringzylinder 2 verbunden. Der Kugelaufnahmering 7 ist dabei,fest mit dem Ringzylinder 2 verbunden, z. B. eingepresst oder verschraubt.

Innerhalb der Druckmittelkammer 3 ist eine Druckfeder 30 angeordnet. Über die Druckfeder 30 ist der Ringkolben 2 unter leichter Vorspannung über die Betätigungsplatte 9 gegen das Kupplungsausrückelement 10 gedrückt. Durch die Druckfeder 30 wird der Ringzylinder 2 im drucklosen Zustand in einer definierten Position gehalten.

Der Ringzylinder 1 weist eine innere Lauffläche 5 und eine äußere Lauffläche 6 für den Ringkolben 2 auf. Sämtliche zwischen dem Ringkolben 2 und dem Ringzylinder 1 wirksamen Dicht- und Abstreifelemente 11, 12, 13, 14, 15, 16 sind direkt an dem Ringkolben 2 befestigt, d.h. ohne zusätzliche Bauteile wie etwa ein Zwischenstück oder ein zusätzliches Halteelement. Auf der Innenseite des Ringzylinders 2 sind Ringdichtungen 11, 12, 13, 14 vorgesehen, die mit der inneren Lauffläche 5 in Kontakt stehen. Am Außenumfang des Ringzylinders 2 ist in einer umlaufenden Außennut 19 des Ringzylinders 2 ein Abstreifring 15 mit einer doppelt wirkende Abstreiflippe vorgesehen. Zusätzlich ist in einer zweiten umlaufenden Außennut 20 des Ringzylinders 2 ein Lippendichtring 16 angeordnet. Der Abstreifring 15 und der Lippendichtring 16 liegen mit ihren jeweiligen Dichtlippen an der äußeren Lauffläche 6 des Ringzylinders 1 an. Zwischen dem Abstreifring 15 und dem Lippendichtring 16 ist ein Ringraum 33 gebildet, der zur Aufnahme von Schmiermittel (Fett) geeignet ist.

Der Ringzylinder 1 und der Ringkolben 2 sind aus Aluminiumguss gefertigt. An dem Ringzylinder 1 ist sowohl die innere Lauffläche 5 als auch die äußere Lauffläche 6 mit einer Eloxierung versehen.

In dem Bereich 31 weist der Ringzylinder 1 radiale, um die Längsachse L des Ringzylinders umlaufende Verstärkungsrippen 21, 22, 23, 47, 48 auf.

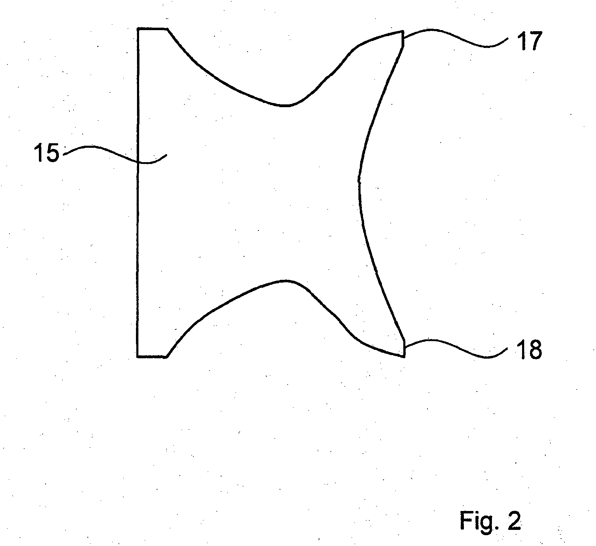

Die Figur 2 zeigt eine vorteilhafte Ausführungsform des Abstreifrings 15 im Querschnitt. Wie erkennbar ist, weist der Abstreifring 15 eine Abstreiflippe 17 auf, die von der Rückwand 24 des Ringzylinders 1 fort weist, und eine zweite Abstreiflippe 18, die in Richtung der Rückwand 24 weist.

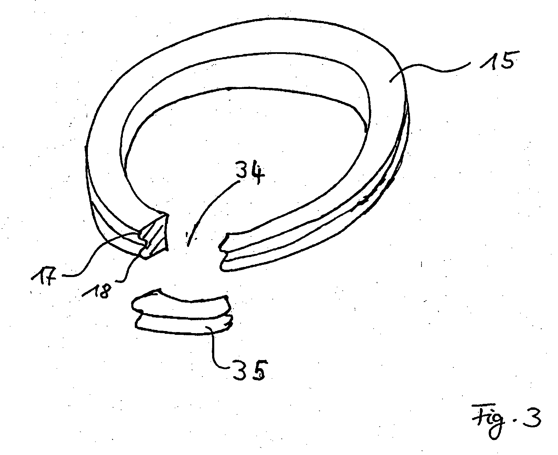

Die Figur 3 zeigt eine weitere Ausführungsform des Abstreifrings 15 in perspektivischer Darstellung. Der Abstreifring 15 weist in Umfangsrichtung eine Unterbrechung 34 auf, z. B. in der Art eines Schlitzes. In die Unterbrechung 34 ist ein Einsatzstück 35 einsetzbar. Das Einsatzstück 35 ist vorteilhaft aus einem Elastomermaterial, z. B. Gummi, hergestellt. Das Einsatzstück 35 weist das gleiche äußere Dichtprofil auf wie der Abstreifring 15, insbesondere die Abstreiflippen 17, 18.

## Patentansprüche

1. Einrichtung mit einem Ringzylinder (1) und einem konzentrisch auf dem Ringzylinder angeordneten Ringkolben (2), wobei zwischen dem Ringzylinder (1) und dem Ringkolben (2) eine im Wesentlichen ringförmige, mit Druckluft befüllbare Druckmittelkammer (3) gebildet ist, wobei die im Wesentlichen ringförmige Druckmittelkammer (3) zwischen dem gkolben (2) und einer Rückwand (24) des Ringzylinders (1) gebildet ist, wobei der Ringkolben (2) bei Beaufschlagung der Druckmittelkammer (3) mit Druck gegenüber dem Ringzylinder (1) beweglich ist, wobei die Einrichtung als Kupplungsaktuator für eine Kupplung eines Kraftfahrzeugs ausgebildet ist wobei auf dem Ringkolben (2) eine gegenüber dem Ringkolben um die Längsachse (L) des Ringkolbens drehbar gelagerte Betätigungsplatte (9) für eine Kupplung (10) angeordnet ist, und wobei der Ringzylinder (2) am Außenumfang radiale, um die Längsachse (L) des Ringzylinders umlaufende Verstärkungsrippen (21, 22, 23, 7, 48) aufweist **dadurch gekennzeichnet, dass** der Ringzylinder (1) aus Aluminiumguss besteht, spanend bearbeitet ist und eine innere Lauffläche (5) und eine äußere Lauffläche (6) für den Ringkolben (2) aufweist, wobei die Zylinderlaufflächen (5, 6) mit einer Eloxierung versehen sind, wobei sämtliche zwischen dem aus Aluminiumguss bestehenden Ringkolben (2) und dem Ringzylinder (1) wirksamen Dicht- und Abstreifelemente (11, 12, 13, 14, 15, 16) direkt an dem Ringkolben (2) befestigt sind, und dass ausgehend von der Rückwand (24) die Abstände zwischen den Verstärkungsrippen (21, 22, 23) abnehmen und/oder die Breite der Verstärkungsrippen (21, 22, 23) zunimmt.

2. Einrichtung nach Anspruch 1, **dadurch gekennzeichnet, dass** der Ringkolben (2) als Abstreifelement einen umlaufenden, in beiden Zylinder-Laufrichtungen wirksamen Abstreifring (15) aufweist, durch den ein Eindringen von Partikeln aus der Umgebung in die Druckmittelkammer (3) und zugleich ein Ausdringen von Schmiermittel) aus der Druckmittelkammer (3) verhindert ist.

3. Einrichtung nach Anspruch 2, **dadurch gekennzeichnet, dass** der Abstreifring (15) wenigstens eine doppeltwirkende Abstreiflippe (17, 18) oder eine Anordnung von zwei Abstreiflippen (17, 18) aufweist.

4. Einrichtung nach Anspruch 2 oder 3, **dadurch gekennzeichnet, dass** der Abstreifring (15) im nicht in der Einrichtung montierten Zustand einen größeren Innendurchmesser aufweist als der Außendurchmesser des Ringkolbens (2) im für die Anordnung des Abstreifrings (15) vorgesehenen Bereich (19).

5. Einrichtung nach wenigstens einem der Ansprüche 2 bis 4, **dadurch gekennzeichnet, dass** der Abstreifring (15) in Umfangsrichtung eine Unterbrechung (34) aufweist und in der Unterbrechung (34) ein elastisches Einsatzstück (35) angeordnet ist.

6. Einrichtung nach wenigstens einem der vorhergehenden Ansprüche, **dadurch gekennzeichnet, dass** der Ringkolben (2) als Dichtelement einen im Abstand vom Abstreifring (15) angeordneten umlaufenden Dichtring (16) aufweist, durch den die Druckmittelkammer (3) gegen ein Austreten von Druckmittel abgedichtet ist.

7. Einrichtung nach wenigstens einem der vorhergehenden Ansprüche, **dadurch gekennzeichnet, dass** der Innendurchmesser des Ringzylinders (1) an einer vorbestimmten Position (26) in Richtung der Längsachse (L) des Ringzylinders (1) von einem ersten auf einen zweiten Durchmesser vergrößert ist und am Übergang von dem ersten auf den zweiten Durchmesser lamellenartige Verstärkungsrippen (27) mit einer Erstreckung In radialer und entlang der Längsachse (L) verlaufender Richtung angeordnet sind.

## Claims

1. Device having an annular cylinder (1) and an annular piston (2) which is arranged concentrically on the annular cylinder, a substantially annular pressure medium chamber (3) which can be filled with compressed air being formed between the annular cylinder (1) and the annular piston (2), the substantially annular pressure medium chamber (3) being formed between the annular piston (2) and a rear wall (24) of the annular cylinder (1), the annular piston (2) being movable with respect to the annular cylinder (1) if the pressure medium chamber (3) is loaded with pressure, the device being configured as a clutch actuator for a clutch of a motor vehicle, an actuating plate (9) for a clutch (10) being arranged on the annular piston (2), which actuating plate (9) is mounted such that it can be rotated with respect to the annular piston about the longitudinal axis (L) of the annular piston, and the annular cylinder (2) having radial reinforcing ribs (21, 22, 23, 7, 48) on the outer circumference which run around the longitudinal axis (L) of the annular cylinder, **characterized in that** the annular cylinder (1) consists of cast aluminium, is machined with the removal of material and has an inner running surface (5) and an outer running surface (6) for the annular piston (2), the cylinder running surfaces (5, 6) being provided with an anodization, all of the sealing and wiping elements (11, 12, 13, 14, 15, 16) which are active between the annular piston (2) which consists of cast aluminium and the annular cylinder (1) being fastened directly to the annular piston (2), and **in that**, starting from the rear wall (24), the spacings between the reinforcing ribs (21, 22, 23) decrease and/or the width of the reinforcing ribs (21, 22, 23) increases.

2. Device according to Claim 1, **characterized in that**, as wiping element, the annular piston (2) has a circumferential wiping ring (15) which is effective in both cylinder running directions and by way of which a penetration of particles from the surroundings into the pressure medium chamber (3) and at the same time an escape of lubricant from the pressure medium chamber (3) are prevented.

3. Device according to Claim 2, **characterized in that** the wiping ring (15) has at least one double-acting wiping lip (17, 18) or an arrangement of two wiping lips (17, 18).

4. Device according to Claim 2 or 3, **characterized in that**, in the state in which it is not mounted in the device, the wiping ring (15) has a greater internal diameter than the external diameter of the annular piston (2) in the region (19) which is provided for the arrangement of the wiping ring (15).

5. Device according to at least one of Claims 2 to 4, **characterized in that** the wiping ring (15) has an interruption (34) in the circumferential direction, and an elastic insert piece (35) is arranged in the interruption (34).

6. Device according to at least one of the preceding claims, **characterized in that**, as sealing element, the annular piston (2) has a circumferential sealing ring (16) which is arranged at a spacing from the wiping ring (15) and by way of which the pressure medium chamber (3) is sealed against an escape of pressure medium.

7. Device according to at least one of the preceding claims, **characterized in that** the internal diameter of the annular cylinder (1) is increased from a first to a second diameter in the direction of the longitudinal axis (L) of the annular cylinder (1) at a predefined position (26), and lamellar-like reinforcing ribs (27) with an extent in the radial direction and in the direction which runs along the longitudinal axis (L) are arranged at the transition from the first to the second diameter.

## Revendications

1. Dispositif comprenant un cylindre annulaire (1) et un piston annulaire (2) disposé concentriquement sur le cylindre annulaire, entre le cylindre annulaire (1) et le piston annulaire (2) étant formée une chambre de milieu sous pression (3) pouvant être remplie d'air sous pression, essentiellement annulaire, la chambre de fluide sous pression (3) essentiellement annulaire étant formée entre le piston annulaire (2) et une paroi arrière (24) du cylindre annulaire (1), le piston annulaire (2), lorsque la chambre de fluide sous pression (3) est sollicitée avec de la pression, étant déplaçable par rapport au cylindre annulaire (1), le dispositif étant réalisé sous forme d'actionneur d'embrayage pour un embrayage d'un véhicule automobile, une plaque d'actionnement (9) pour un embrayage (10) supportée de manière à pouvoir tourner par rapport au piston annulaire autour de l'axe longitudinal (L) du piston annulaire étant disposée sur le piston annulaire (2) et le cylindre annulaire (2) présentant, au niveau de la périphérie extérieure, des nervures de renforcement radiales (21, 22, 23, 7, 48) s'étendant sur la périphérie autour de l'axe longitudinal (L) du cylindre annulaire, **caractérisé en ce que** le cylindre annulaire (1) se compose de fonte d'aluminium, est usiné par enlèvement de copeaux et présente une surface de roulement interne (5) et une surface de roulement externe (6) pour le piston annulaire (2), les surfaces de roulement du cylindre (5, 6) étant pourvues d'une anodisation, tous les éléments d'étanchéité et de raclage (11, 12, 13, 14, 15, 16) agissant entre le piston annulaire (2) constitué de fonte d'aluminium et le cylindre annulaire (1) étant directement fixés au piston annulaire (2), et **en ce que**, partant de la paroi arrière (24), les distances entre les nervures de renforcement (21, 22, 23) diminuent et/ou la largeur des nervures de renforcement (21, 22, 23) augmente.

2. Dispositif selon la revendication 1, **caractérisé en ce que** le piston annulaire (2) présente en tant qu'élément de raclage une bague de raclage (15) périphérique, agissant dans les deux sens de déplacement du cylindre, laquelle empêche une pénétration de particules provenant de l'environnement dans la chambre de fluide sous pression (3) et empêche en même temps une sortie de lubrifiant hors de la chambre de fluide sous pression (3).

3. Dispositif selon la revendication 2, **caractérisé en ce que** la bague de raclage (15) présente au moins une lèvre de raclage à double effet (17, 18) ou un agencement de deux lèvres de raclage (17, 18).

4. Dispositif selon la revendication 2 ou 3, **caractérisé en ce que** la bague de raclage (15), dans l'état non monté dans le dispositif, présente un plus grand diamètre intérieur que le diamètre extérieur du piston annulaire (2) dans la région (19) prévue pour l'agencement de la bague de raclage (15).

5. Dispositif selon au moins l'une quelconque des revendications 2 à 4, **caractérisé en ce que** la bague de raclage (15) présente dans la direction périphérique une zone d'interruption (34) et une pièce d'insertion élastique (35) est disposée dans la zone d'interruption (34).

6. Dispositif selon au moins l'une quelconque des revendications précédentes, **caractérisé en ce que** le piston annulaire (2) présente, en tant qu'élément d'étanchéité, une bague d'étanchéité (16) périphérique disposée à distance de la bague de raclage (15), qui permet d'étanchéifier la chambre de fluide sous pression (3) pour empêcher une sortie de fluide sous pression.

7. Dispositif selon au moins l'une quelconque des revendications précédentes, **caractérisé en ce que** le diamètre intérieur du cylindre annulaire (1), au niveau d'une position prédéfinie (26), dans la direction de l'axe longitudinal (L) du cylindre annulaire (1), est augmenté d'un premier à un deuxième diamètre, et des nervures de renforcement de type lamelles (27) sont disposées au niveau de la transition du premier au deuxième diamètre, avec une étendue dans la direction radiale et s'étendant le long de l'axe longitudinal (L).
